# EUROPEAN PATENT APPLICATION

(11) **EP 0 674 450 A2**
(43) Date of publication of application: **27.09.1995**
(21) Application number: 95104190.4
(22) Date of filing: 22.03.1995
(51) Int. Cl.: H04Q 7/20

(54) **Restricted-mobility mobile system and method of operating the same**

(30) Priority: 24.03.1994 IT MI940555
(71) Applicant: ALCATEL ITALIA S.p.A., I-20158 Milano (IT)
(72) Inventor: Panico, Luigi, I-84091 Battipaglia (IT)
(74) Representative: Pohl, Herbert, Dipl.-Ing

(57) **Abstract**

The present invention relates to a restricted-mobility mobile system and to the method of operating the same.

The sending and reception of a telephone call in a mobile telephone entail the use of the structures of the mobile network and in addition the ones of the fixed network.

The present invention avoids the use of at least part of the structures of the mobile network when the user stands in the neighbourhood of its usual residence.

## Description

The present invention relates to a restricted-mobility mobile system and to the method of operating the same.

The sending and reception of a telephone call in a mobile apparatus entails the use of the mobile network structures (not only base stations but especially the network subsystem) and in addition those of the fixed network (PSTN, ISDN, ATM, etc.).

The structures of the mobile network are expensive and complicated in relation to the number of telephone conversations that they are capable of handling.

The object of the present invention is, therefore, to limit the need of resorting to them naturally without limiting the possibility of realizing telephone calls via radio.

This object is achieved by following the teachings of the method set forth in claim 1 and/or of the method set forth in claim 2 and thanks to the primary radio station, the secondary radio station, the mobile telephone set and the mobile system respectively having the characteristics set forth in claims 3, 6, 8 and 9; further advantageous aspects of the present invention are set forth in the dependent claims.

The invention is based on the underlying idea that consists in avoiding the use of the mobile network structures, in particular of the network subsystem, when the user is in the neighbourhood of his usual or "belonging" residence, and in using in this circumstance his access point to the fixed network, in general the telephone loop.

The invention will now be described better hereinafter in conjunction with the attached drawings wherein:
- Fig. 1: is a schematic representation of the mobile system in accordance with the present invention,
- Fig. 2: represents a block diagram of a primary station,
- Fig. 3: represents a block diagram of a secondary station in accordance with the present invention.

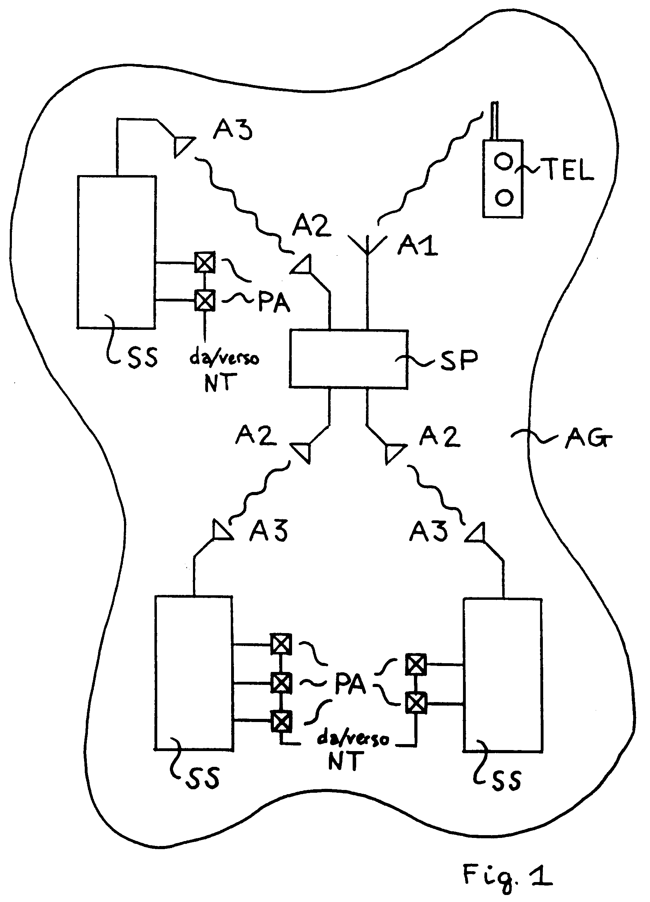

In Fig. 1 there is shown a primary radio station that covers, via radio, a limited geographical area; inside it there is shown, by way of an example, only one mobile telephone TEL and three secondary radio stations SS.

Station SP is provided with a first antenna system A1 for radiocommunication with the telephone TEL and of a second antenna system A2 for radiocommunication with stations SS; these are also provided each with an antenna system A3 for radiocommunication with station SP.

Each secondary station SS has at least one access point PA to a fixed telephone network NT; in general there are a plurality of access points.

As in the event of existing mobile systems, a large geographical area is subdivided into restricted geographical areas, like area AG, each covered by a primary radio station SP, and each user is associated with a pre-established restricted geographical area which is connected to his usual residence.

As in the case of conventional wired telephone systems, each user is associated with a predetermined access point PA of the fixed telephone network NT, generally the termination of a telephone loop.

Starting from these two assumptions, the methods in accordance with the present invention will now be described.

The method of sending a telephone call on the fixed telephone network NT provided with access points PA through the mobile telephone TEL from a user located in the geographical area AG associated therewith, comprises the steps of:
a) sending via radio a telephone signal from the telephone TEL to the primary radio station SP covering the geographical area AG,
b) sending via radio such telephone signal from the primary radio station SP to a secondary radio station SS associated with such user,
c) sending by cable such telephone signal from said secondary radio station SS to the access point PA of the network NT, associated with said user,
d) sending such telephone signal on the network NT through such access point PA.

The method of receiving a telephone call from the fixed telephone network NT provided with access points PA through the mobile telephone TEL from a user located in the geographical area AG associated therewith, comprises the steps of:
a) sending a telephone signal to an access point PA of the network NT, associated with such user,
b) sending by cable such telephone signal from such access point PA to a secondary radio station SS associated with the latter point,
c) sending via radio such telephone signal from such secondary radio station SS to the primary radio station SP associated therewith,
d) sending via radio such telephone signal from the primary radio station SP to such telephone TEL in the geographical area AG.

Naturally, station SP must be able to establish if a user who is trying to send a telephone call is among those associated therewith, in other words among those having usual residence inside the geographical area covered via radio by it; moreover, it must recognize also which is the secondary station SS associated with such user in order to be able to send the telephone signal to the correct point.

This can be made simply by providing the primary station SP with a table containing the list of the "local" users and the corresponding associated Secondary stations; naturally it is advisable to ascertain the identity of the user requiring the sending of a telephone call, in one of the several ways known per se.

In the event of receiving a telephone call, the fixed network NT shall provide, in the absence of the user from the area associated with him, that the telephone call is switched towards the conventional mobile network so that the user can be individuated all over the domestic or European territory.

According to such methods it is not contemplated that the user can move from one geographical area to an adjacent one during the telephone conversations.

The structure of the elements forming the mobile system according to the present invention will now be made through two schematic examples.

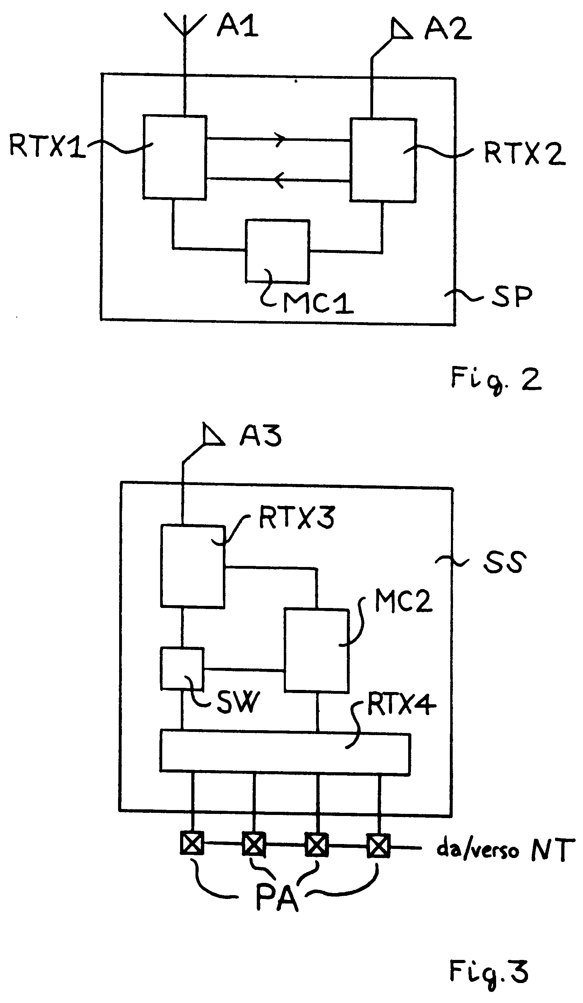

The primary radio station SP, schematically represented in Fig. 2, comprises first transceive means RTX1 and a first antenna system A1 capable, in combination, of connecting it, via radio, to mobile telephones TEL located in the geographical area AG, and second transceive means RTX2 and a second antenna system A2 capable, in combination, of connecting it, via radio, to secondary radio stations SS; the transceive means RTX1 and RTX2 are connected each other in such a way that the first ones can transmit signals received from the second ones and viceversa. It further comprises control means MC1 provided with a table containing a list of users and associated secondary radio stations and designed to establish and maintain at least one telephone link, through the primary radio station SP itself, between a telephone TEL, associated with a user, and the secondary radio station associated with the same user when said user is identified as belonging to said list and stands in the geographical area AG.

The term "antenna system" is used herein to designate one or more antennas used in transmission and/or reception having directional and/or omnidirectional patterns, and the term "transceive means" is used to designate both a single transceiver and a plurality of them operating in parallel.

In Fig. 1, for instance, station SP is provided with three antennas A2 for directional reception and transmission. Due to the partial similarity with the conventional mobile system, and in order to avoid the useless duplication of the expensive radio equipment, it is advantageous that the control means MC1 are capable of operating the station SP as a mobile base station in relation to users not belonging to the above-mentioned list.

In the primary station SP, the control means MC1 can further be designed to validate the identity of the users that require access.

The secondary radio station SS, represented schematically in Fig. 3, comprises first transceive means RTX3 and an antenna system A3 capable, in combination, of connecting it, via radio, to the primary radio station SP associated therewith, second trasceive means RTX4 designed to connect it, by cable, to a plurality of access points PA of the fixed telephone network NT, switching means SW designed to connect the first (RTX3) and the second (RTX4) transceive means, and control means MC2 designed to establish and maintain at least one telephone connection, through the secondary station itself, between the primary station SP and an access point PA selected from said plurality. In general, such access point is chosen on the basis of the identity of at least one of the users of said connection.

Due to the easy occurrence of radio interferences, it is advantageous that the control means MC2 are designed to verify the authorization to the connection before establishing it.

A mobile telephone suitable to operate with the mobile system in accordance with the present invention can have at least two operation modes: one for interacting with primary radio stations and one with mobile base stations.

However, should the primary radio station physically coincide with the base station, then the different handling of the calls could result quite transparent to the user and to the telephone terminal and therefore even a common mobile telephone apparatus could be used.

## Claims

1. Method of sending a telephone call over a fixed telephone network provided with access points through a mobile telephone from a user located in a geographical area associated therewith, comprising the steps of:
a) sending via radio a telephone signal from said mobile telephone to a primary radio station covering said geographical area,
b) sending via radio said telephone signal from said primary radio station to a secondary radio station associated with said user,
c) sending by cable said telephone signal from said secondary radio station to an access point of said network associated with said user,
d) sending said telephone signal over said network through said access point.

2. Method of receiving a telephone call from a fixed telephone network provided with access points through a mobile telephone from a user located in a geographical area associated therewith, comprising the steps of:
a) sending a telephone signal to an access point of said network associated with said user,
b) sending by cable said telephone signal from said access point to a secondary radio station associated with the latter,
c) sending via radio said telephone signal from said secondary radio station to a primary radio station associated with the latter,
d) sending via radio said telephone signal from said primary radio station to said mobile telephone in said geographical area.

3. Primary radio station comprising first transceive means and a first antenna system capable, in combination, of connecting it, via radio, to mobile telephones located inside a predetermined geographical area, second transceive means and a second antenna system capable, in combination, of connecting it, via radio, to secondary radio stations, said transceive means being connected each other so that the first ones are able to transmit the signals received from the second ones and viceversa, and control means provided with a table containing a list of users and of associated secondary radio stations and capable of establishing and maintaining at least one telephone connection through the primary radio station itself between a telephone associated with a user and the secondary radio station associated with the same user when said user is identified as belonging to said list and stands in said geographical area.

4. Primary station according to claim 3, characterized in that said control means are designed to validate the identity of the users.

5. Primary station according to claim 3, characterized in that said control means are capable of operating it as mobile base station in relation to users not belonging to said list.

6. Secondary radio station comprising first transceive means and an antenna system capable, in combination, of connecting it, via radio, to a primary radio station associated therewith, second transceive means designed to connect it, by cable, to a plurality of access points of a fixed telephone network, switching means designed to connect said first and said second transceive means, and control means designed to establish and maintain at least one telephone connection through the secondary station itself between said primary station and an access point selected from said plurality.

7. Secondary station according to claim 6, characterized in that said control means are designed to verify the authorization of said connection before establishing it and to select said access point on the basis of the identity of at least one of the users of said connection.

8. Mobile telephone characterized by comprising at least two operation modes: one for interacting with primary radio stations and one for interacting with mobile base stations.

9. Mobile system designed to serve a predetermined geographical area, comprising a primary radio station according to claim 3 and a plurality of secondary radio stations according to claim 6, connected, via radio, to said primary station and, by cable, to a fixed telephone network, and designed to send and/or receive telephone calls over and/or from said network, according to the method of claims 1 and/or 2, by users associated with, and located in, said area, provided with mobile telephones.
